Europäisches Patentamt

European Patent Office

Office européen des brevets

(19)

(11) Publication number: **0 460 736 A1**

## EUROPEAN PATENT APPLICATION

(12)

(21) Application number: **91201286.1**

(22) Date of filing: **29.05.91**

(51) Int. Cl.5: **H05B 39/04**

(30) Priority: **07.06.90 NL 9001283**

(43) Date of publication of application:
**11.12.91 Bulletin 91/50**

(84) Designated Contracting States:
**AT BE CH DE DK ES FR GB GR IT LI LU NL SE**

(71) Applicant: **WATERS BEHEER B.V.**
**Science Park Eindhoven 49**
**NL-5691 PX Son(NL)**

(72) Inventor: **Van der Burgt, Augustinus Martinus**
**Nicolaas Maria**
**Raffendonkstraat 24**
**NL-5688 DK Oirschot(NL)**

(74) Representative: **Fieret, Johannes, Ir. et al**
**c/o Algemeen Octrooibureau P.O.Box 645**
**NL-5600 AP Eindhoven(NL)**

(54) An electronic transformer for low voltage lamps with lamp voltage stabilisation.

(57) An electronic transformer for low voltage lamps with a supply circuit provided with a mains transformer and a switching circuit for powering one or more low voltage lamps by means of two supply lines from the public electricity grid, a measuring circuit for measuring the real lamp voltage by means of the two supply lines and a measuring line connected to one of said supply lines at the lamp side, a comparator for comparing the real lamp voltage measured with a desired lamp voltage, and a control circuit for controlling the switching circuit in dependence on the result of comparison so as to have the supply circuit maintain the real lamp voltage at the desired lamp voltage.

EP 0 460 736 A1

figuur 2

The invention relates to an electronic transformer for low voltage lamps, comprising a supply circuit provided with a mains transformer and a switching circuit for powering one or more low voltage lamps by means of two supply lines from the public electricity grid.

An electronic transformer of the above type is commercially available and known, therefore.

Low voltage lamps, in particular halogen lamps, require an accurate and stable lamp voltage in order to be able to provide the desired light output and colour temperature on the one hand and to realise a suitably long life on the other hand.

Some of the disadvantageous features of conventional transformers are overcome by the known electronic transformer, for example the mains voltage variations at the primary side being passed directly to the secondary side, and the voltage at the secondary side being dependent on the load.

When installing a conventional transformer said voltage dependence and, moreover, voltage losses occurring in the supply lines may be compensated by providing several taps at the secondary side of the transformer, as a result of which several secondary voltages can be selected, whereby selection may take place as the result of a real lamp voltage to be measured with e.g. a multimeter so that an optimum, once-only in principle, adjustment can be selected. Future changes of the mains voltage and/or a lamp being substituted by a type having a different wattage will undo this compensation, however.

The known electronic transformer on the other hand is arranged in such a manner that mains voltage fluctuations and load variations are compensated continuously. The above compensation of the voltage loss across the supply lines, as takes place with the conventional transformer, but on a continuous basis in this case, is not possible, however, so that a suitable operating voltage of the lamp will still not be achieved with the known electronic transformer. This constitutes a drawback which the present invention aims to overcome.

In order to accomplish that objective the invention provides an electronic transformer of the kind mentioned in the preamble, which is characterized in that said electronic transformer furthermore comprises a measuring circuit for measuring the real lamp voltage by means of the two supply lines and a measuring line connected to one of said supply lines at the lamp side, a comparator for comparing the real lamp voltage measured with a desired lamp voltage, and a control circuit for controlling the switching circuit in dependence on the result of comparison, so as to have the supply circuit maintain the real lamp voltage at the desired lamp voltage.

The advantages of the solution proposed by the present invention are that all the above sources of voltage fluctuation are compensated, i.e. that the maximum operating voltage of the lamp is correct at all times, irrespective of mains voltage fluctuations, lamp wattage and line losses. All other functional demands to be made of an electronic transformer, such as short-circuit resistance, gradual ignition (soft start) and power limitation can be realized unimpaired thereby.

One embodiment of the electronic transformer according to the invention is further characterized in that the desired lamp voltage is a variable lamp voltage, which may be the correct lamp voltage at the very most.

This measure implies that controlling the reference voltage, which is applied to the comparator and which determines the desired lamp voltage, makes it possible to dim the lamp or lamps. Because the comparator is arranged in the secondary part of the electronic transformer and is separated from the mains, therefore, it will be simple to dim several electronic transformers according to the invention in parallel.

In accordance with the invention only one measuring line is used, because it is assumed that the voltage losses in the two supply lines are substantially equal. If this is not the case a second measuring line must be used, which in that case is connected at the lamp side to the supply line other than the one to which the first measuring line is connected. Of course this increases the installation cost and the complexity of the eventual electronic transformer.

The electronic transformer according to the invention may moreover have secondary switching or primary switching. The advantages of the first possibility are that the electronics of the electronic transformer may be simple and that the control accuracy is very high with a fluctuating mains voltage as well as with different lamp wattages as well as with varying voltage losses across the supply lines. The advantages of the second possibility are that the electronic transformer can be directly connected to the mains and that the dissipation is very low or, in other words, that the efficiency is very high.

Finally it is noted that the electronic transformer according to the invention is suitable for an alternating current mains as well as for a direct current mains.

The invention will be described in more detail by means of two possible embodiments and with reference to the drawings, in which:

Figure 1 is a block diagram of an embodiment of an electronic transformer, wherein secondary switching is used;

Figure 2 is a possible block diagram for the transformer of Figure 1;

Figure 3a is a block diagram of an embodiment of an electronic transformer, wherein primary switching is used;

Figure 3b shows a circuit diagram of a half-bridge circuit, which may be used in the electronic having primary switching according to the present invention of Figure 3a; and

Figures 4a and 4b show in combination a possible circuit diagram for the transformer of Figures 3a, b.

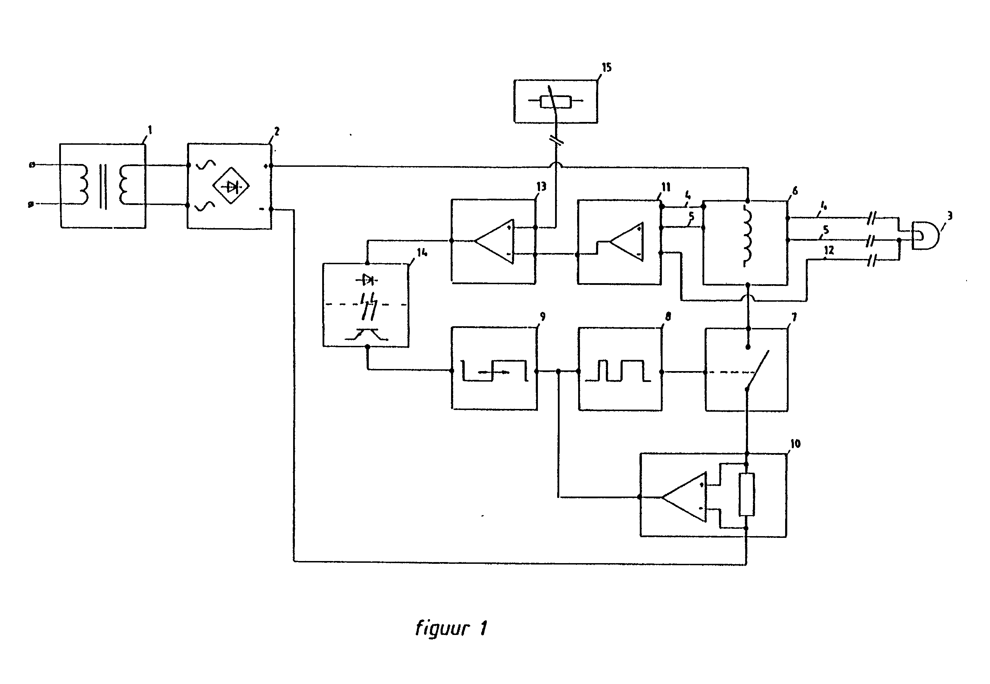

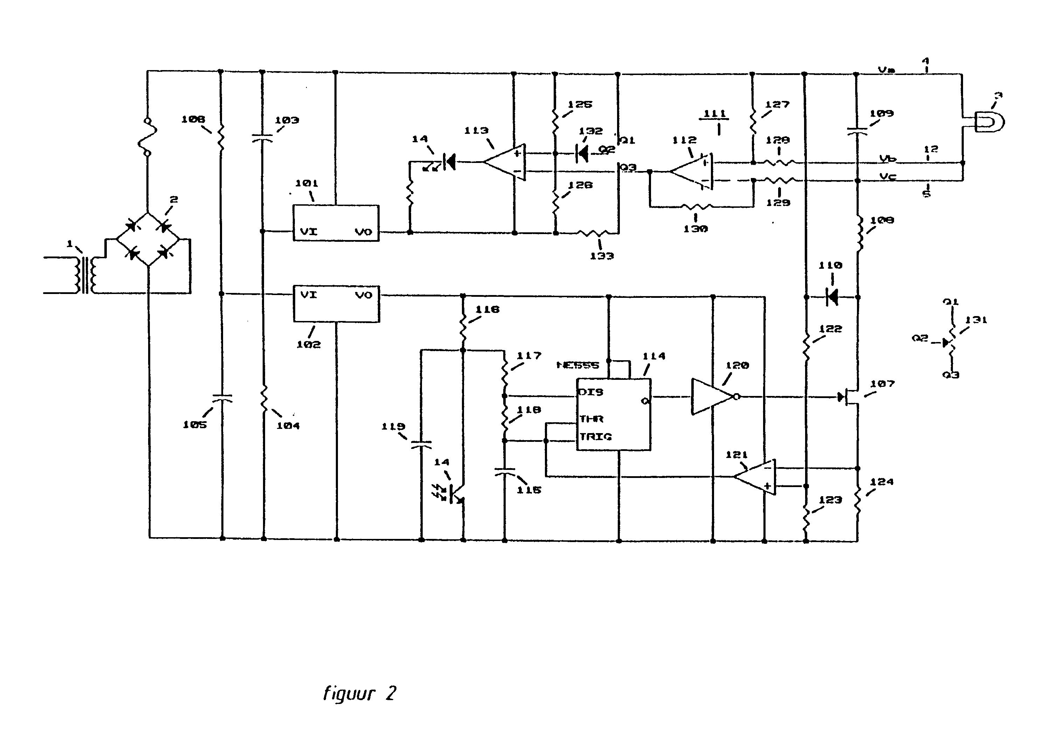

In Figure 1 the electronic transformer having secondary switching comprises a mains transformer 1 for stepping down a mains voltage of 220 V in this case and a rectifier 2 connected behind said mains transformer 1 for rectifying the stepped-down mains voltage to a DC voltage of for example 35 V. If the mains voltage is a DC voltage a DC-DC converter may be used instead of the combination of mains transformer 1 and rectifier 2. The only thing that matters is the fact that a relatively low DC voltage is available. Figure 1 furthermore shows a single halogen lamp 3, which is powered by means of two supply lines 4 and 5 and by a power filter 6. Said power filter 6 is connected by a switch 7, which in turn is driven by a drive circuit 8 on the basis of a signal supplied by a duty ratio adjusting circuit 9. The power filter 6 is connected, in series with the switch 7, to the rectifier 2. Furthermore a current limiter 10 is connected, in series with the power filter 6 and the switch 7, to the output of the rectifier 2, whereby the current limiter 10 has a predominant effect on the drive circuit 8 with respect to the duty ratio adjusting circuit 9. The power filter 6 and the switch 7 form a switching circuit. It goes without saying that in principle it is also possible to use another switching circuit, as long as said circuit is able to control the power to be supplied to the lamp 3, in order that the correct operating voltage is supplied the lamp 3 in non-dimmed condition. In accordance with the essence of the present invention this is only possible, however, if the real lamp voltage supplied to the lamp 3 can be measured and the result of this measurement is used for switching by the switching circuit in such a manner that in said case the real lamp voltage is the correct operating voltage of the lamp 3. Several lamps 3 may otherwise be connected to the power filter 6. The electronic transformer of Figure 1 furthermore comprises a measuring circuit 11, which at the input side is connected to the supply lines 4, 5, and a measuring line 12 which at the lamp side is connected to one of said supply lines 4, 5, the supply line 5 in this case. The measuring circuit 11 supplies an output signal to a comparator 13, which measuring signal represents the real operating voltage of the lamp 3. The comparator 13 compares the output signal of the measuring circuit 12 with a reference signal which, in the non-dimmed condition of a lamp 3, represents the correct operating voltage of the lamp 3. The comparator 13 is coupled to the duty ratio adjusting circuit 9, by means of an optocoupler 14 in this case, in view of galvanic separation. The duty ratio adjusting circuit 9 and the drive circuit 8 in fact form a drive circuit which, dependent on the result of comparison of the comparator 13, drives the switching circuit consisting of blocks 6 and 7 in such a manner that said switching circuit, or more in general the supply circuit comprising the blocks 1 - 2 and 6 - 10 keeps the real lamp voltage at the desired value. Said desired lamp voltage may be the correct operating voltage for the lamp 3 or a lower voltage, which is achieved by presenting a lower reference voltage, by means of the dimming circuit 15 likewise shown in Figure 1, to the comparator 13 than that which corresponds with the correct operating voltage. In other words, the desired lamp voltage is a variable lamp voltage which may maximally be the correct lamp voltage. Figure 1 does not show the supply circuit for the electronics, but possibly, as is shown in Figure 2, two partial supply circuits 101, 103, 104 and 102, 105, 106 may be provided, the one 101, 103, 104 for the measuring circuit 11 and the comparator 13, and the other 102, 105, 106 for the drive circuit 8 and the duty ratio adjusting circuit 9 of for example -12 V and +12 V respectively, whereby the supply circuit 101 - 106 is in turn supplied by the rectifier 2, of course. Finally it is noted that several measuring and control circuits (each comprising blocks 6 - 10, 11, 13, 14) may be connected to one mains transformer 1.

The electronic transformer of Figure 1 will now be further considered with reference to the circuit diagram of Figure 2. The switch 7 may be a MOSFET transistor 107, which switches the output voltage of the rectifier 2 with a frequency of for example a few tens of kHz. The output voltage of the rectifier is sinusoidal, because it only carries out a full-wave rectification and does not have a smoothing effect. The power filter 6 may comprise a coil 108 connected in series to the lamp 3, a capacitor 109 connected across the supply lines 4, 5 and being connected in series to the coil 108, as well as a freewheeling diode 110 having a suitable pole connection via the series connection of the coil 108 and the capacitor 109. The capacitor 109 functions to keep the ripple voltage across the resistor defined by the lamp 3 and the supply lines 4 and 5 very low. The ripple currect largely passes through the capacitor 109, whereby the total magnitude of the ripple is determined by the coil 108.

For measuring the real operating voltage of the lamp 3 a three-point measurement is carried out by means of the supply lines 4, 5 and the measuring line 12. A relatively high current passes through the supply lines. Since hardly any current passes through the measuring line 12 its resistance may be neglected. In this connection it is noted that in case the dimming circuit 15 is used, which may comprise the potentiometer 131, the diode 132 and the resistor 133, the potential on the supply line 4 must be selected to be highest with respect to that on the supply line 5 and the measuring line 12, since otherwise it will not be easy to obtain a stable supply voltage. The measuring circuit 11 may be a differential amplifier 111 which may be built around an operational amplifier 112 and comprises resistors 127 - 130. Of course demands must be made of the maximum length of the supply lines 4, 5, and that dependent on their diameter. In that case the output voltage of the measuring circuit 11 is directly proportional to the real operating voltage of the lamp 3. The shape of this output voltage is a sinus with a neglectable ripple. It may be stated, therefore, that the real operating voltage of the lamp 3 is proportional to the peak of the output voltage of the measuring circuit 11. If the output voltage of the measuring circuit 11 is for example a factor -3 larger than the correct operating voltage of for example 12 Volt, the reference voltage for the rectifier 13 must be -17/3 Volt. Also for the rectifier 13 an operational amplifier 113 with adjusting resistors 125, 126 may be used. Since no negative feedback is used, the output signal of the comparator 13 is a digital signal. The output signal of the comparator 13 must be transmitted to the duty ratio adjusting circuit 9. Since there is a large potential difference between the two, however, this cannot simply be done directly. Seeing that the output signal of the comparator 13 is digital, the application of an optocoupler for that purpose is a simple and inexpensive solution. For the drive circuit 8 and the duty ratio adjusting circuit 9 an integrated timer circuit 114 is used, whose duty ratio is adjustable, which may be realized by switching the timer circuit asynchronously, which results in a square wave whose frequency and duty ratio are adjustable. Besides, the integrated time circuit 114 must not deliver a positive voltage if there is no input signal, because otherwise the switch 7, a MOSFET transistor 107 in this case, would be on during start-up or in case of defects. For that purpose an inverter 120 is provided. The duty ratio adjusting circuit 9 may thereby be a simple network of one capacitor 115 and a number of resistors 116 - 118. When the optocoupler 14 "conducts", a capacitor 119 connected across the output of the optocoupler 14 will discharge, as a result of which the control voltage of the integrated time circuit 114 becomes lower and the duty ratio will become smaller, and vice versa. The current limiter 121 - 124 protects the electronic transformer from damage due to an overload or a short circuit by limiting the magnitude of the current through the switch 7.

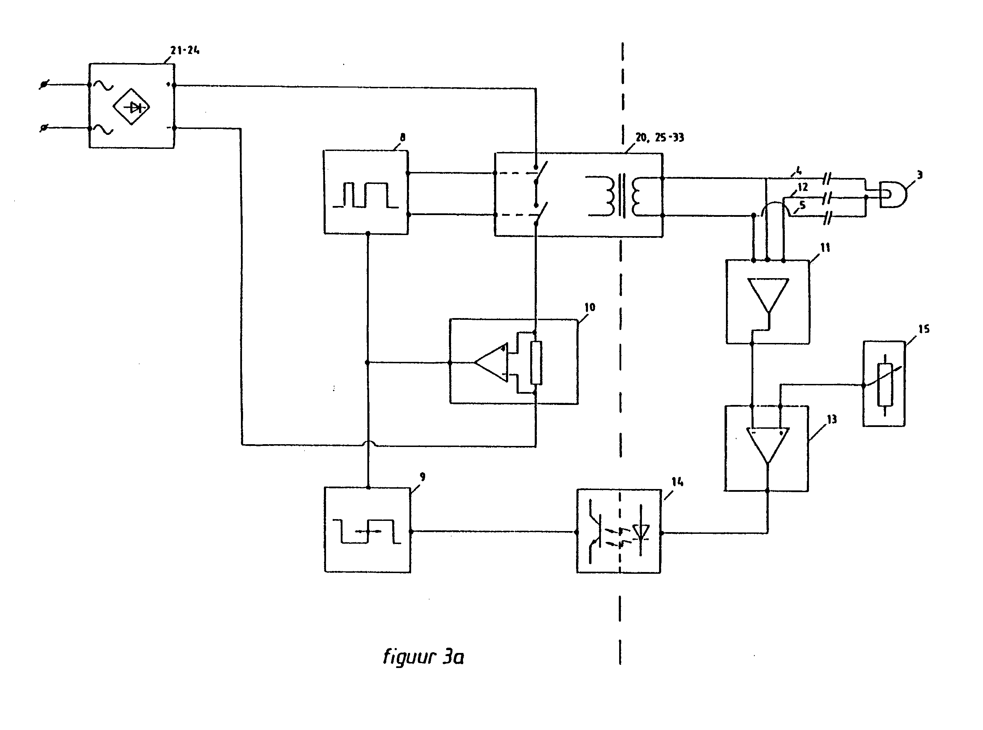

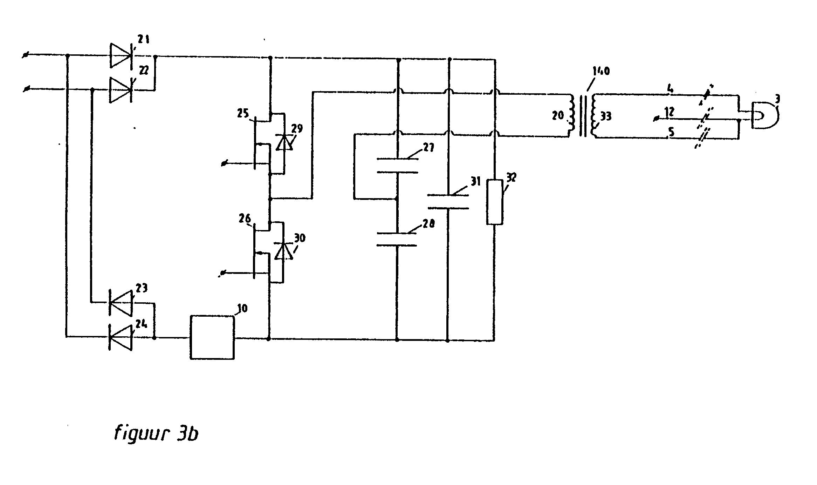

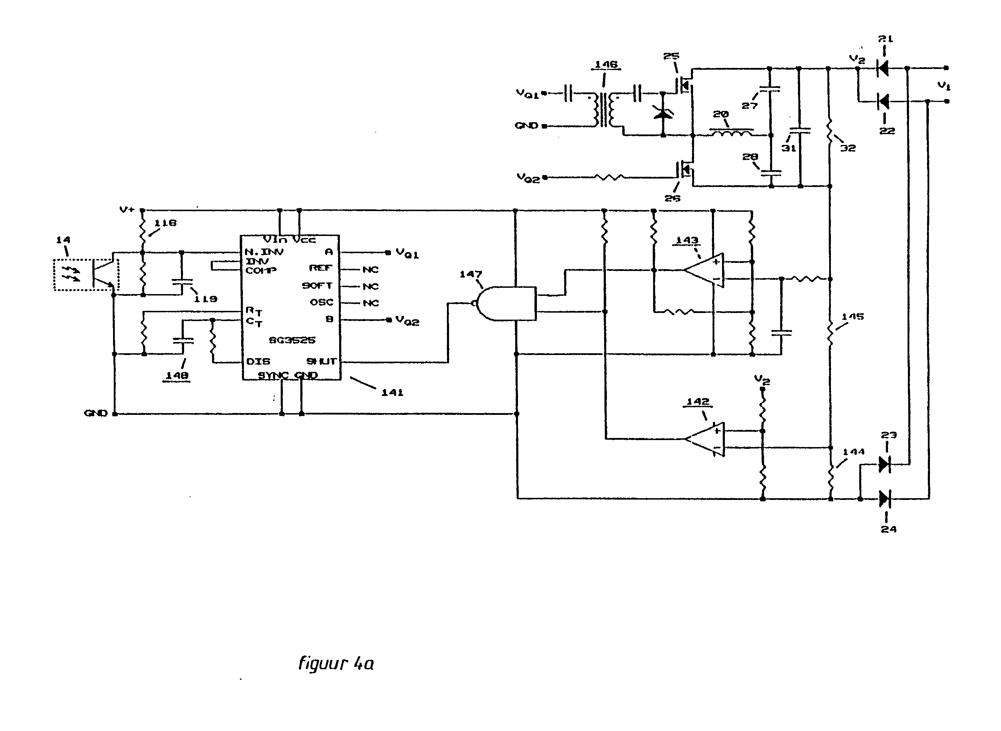

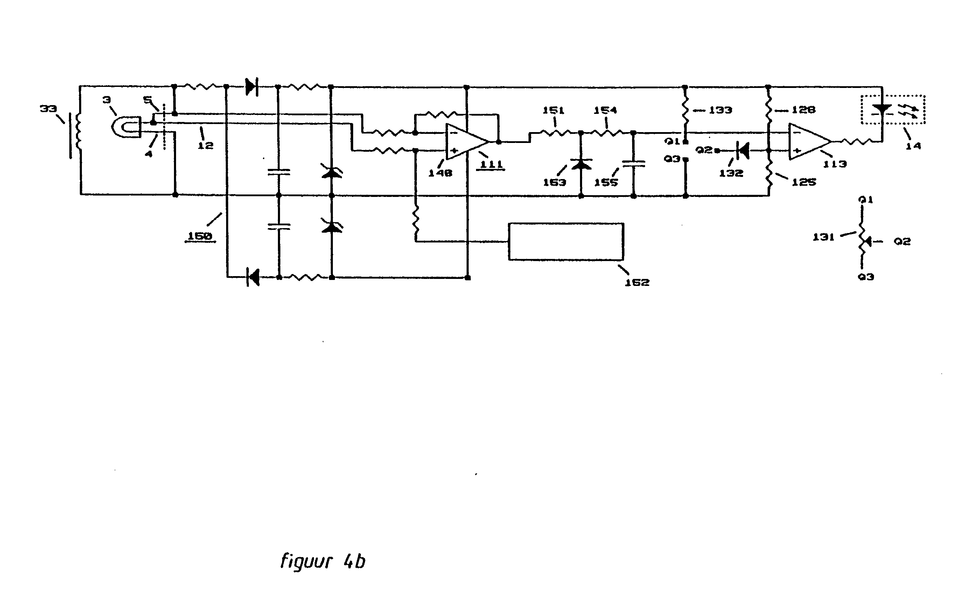

Figure 3a shows the block diagram of a second embodiment, wherein corresponding parts have been given the same numerals as in Figure 1, whilst Figure 3b only shows, in the shape of a circuit diagram, that part of the second embodiment of the electronic transformer according to the invention which fundamentally differs from the embodiment of Figure 1, wherein primary switching is used. In the half-bridge circuit shown in Figure 3b the primary winding 20 of a high frequency mains transformer 140 is incorporated. As is known a high frequency mains transformer 140 is much smaller than a low frequency mains transformer. Diodes 21 - 24 form a full-wave rectifier, which rectifies the mains AC voltage of for example 220 V that is presented. By means of switches, MOSFET transistors 25 and 26 in the illustrated case, the rectified mains voltage can be switched in such a manner that there is an AC voltage across the secondary winding 20 of the high frequency mains transformer 140. The MOSFET transistors 25 and 26 must conduct alternately thereby, and the time during which the MOSFET transistor 25 conducts must be equal to the time during which the MOSFET transistor 26 conducts. The control frequency may be a few tens of kHz, as with the embodiment of Figure 1. The capacitors 27 and 28 must have equal values, said value being dependent on the power which the high frequency mains transformer must be able to supply in view of its transfer ratio and the maximum power loss in the supply lines 4 and 5. The diodes 29 and 30 are provided in connection with switch-off phenomena. The capacitor 31 functions to reduce the effects of currents on the shape of the mains voltage rectified by the rectifier 21 - 24. The resistor 32 functions to discharge the capacitors 27, 28 and 31 after the electronic transformer 140 has been switched off. Referring to Figure 4a, a function generator 141, functioning as a drive circuit 8 may be provided for generating the control signals for the MOSFET transistors 25, 26 or other electronic switches. Reference numeral 148 indicates a frequency determining oscillator circuit for the funtion generator 141, whilst the resistor 116 and the capacitor 119 again determine the duty ratio. The MOSFET transistor 26 may be driven directly by the drive circuit, the MOSFET transistor 25, however, is driven via an optocoupler or pulse transformer 146, in view of the potential differences. With the embodiment of Figure 4a two current limiters 142, 143 are provided, which are both placed at the primary side so as to be able to act on the control signal directly, without any delays, by means of the NAND gate 147. One of the current limiters 142 functions to limit the momentaneous current directly, if necessary, whilst the second current limiter 143 monitors the average current for a relatively long time, so that said overload can be prevented. In order to be able to measure the current through the half-bridge circuit shown in Figure 4a two resistors 144, 145 are placed between the "zero" of the half-bridge circuit and the "zero" of the drive circuit 8 (function generator 141). The current passing through said resistors 144, 145 is proportional to the power the half-bridge circuit supplies. With this embodiment of the electronic transformer, referring to Figure 4b, the lamp 3 is connected directly to the secondary winding 33 of the high frequency transformer 140. For measuring the real lamp voltage the three-point measuring is used, as is the case with the first embodiment of Figure 1. Since there is a high frequency signal across the lamp at this point of time, a fast operational amplifier 146 will have to be used for the differential amplifier 111. A supply circuit 150 is provided for the powering of the circuit. Moreover, instead of a peak measurement an average value measurement must be carried out. Since the shape of the signal is known the ratio between the average and the RMS value can be determined therefrom, as a result of which the lamp voltage can be adjusted. Across the lamp 3 there is indeed a square AC voltage with a sinusoidal envelope, whereby the width and the shape of the pulses determine the average and the RMS voltage across the lamp.

The average value is determined by first converting the AC voltage at the output of the differential amplifier 111 into a DC current, by reducing the voltage to zero Volt by means of the resistor 151 and the diode 153 during the negative periods, as a result of which the absolute value of the average voltage and the effective voltage are both reduced by a factor of 2. This is followed by an integration with the resistor 154 and the capacitor 155, which results in the average voltage. The integration time constant is selected between that of the measuring signal and the envelope thereof, so that the integrated signal is equal to a half-rectified sinus whose peak is proportional to the average value. Indirectly another measurement of the peak can be carried out, therefore, which peak is proportional to the average lamp voltage. By means of a simple signal processing by means of a correction circuit 152 a signal may be obtained therefrom which is substantially proportional to the lamp RMS voltage. For the correction circuit 152 a quadratic amplifier may be used, but in view of the cost involved a cheaper alternative will be chosen in practice. Also in this case a comparator 113 is used, which in turn drives an optocoupler 14, which again delivers a digital signal. The adjustment of the duty ratio of the control signals in principle takes place in the same manner as with the first embodiment. I Figures 4a, 4b the same reference numerals are used for corresponding parts as in other Figures of the drawing.

## Claims

1. An electronic transformer for low voltage lamps, comprising a supply circuit provided with a mains transformer and a switching circuit for powering one or more low voltage lamps by means of two supply lines from the public electricity grid, characterized in that said electronic transformer furthermore comprises a measuring circuit for measuring the real lamp voltage by means of the two supply lines and a measuring line connected to one of said supply lines at the lamp side, a comparator for comparing the real lamp voltage measured with a desired lamp voltage, and a control circuit for controlling the switching circuit in dependence on the result of comparison so as to have the supply circuit maintain the real lamp voltage at the desired lamp voltage.

2. An electronic transformer according to claim 1, characterized in that the desired lamp voltage is a variable lamp voltage, which may be the correct lamp voltage at the very most.

3. An electronic transformer according to claim 1 or 2, characterized in that the mains transformer is a high frequency mains transformer, that the switching circuit is provided at the primary side and that the lamp(s) is (are) provided at the secondary side of said high frequency mains transformer.

4. An electronic transformer according to claim 1 or 2, characterized in that the mains transformer is a low frequency mains transformer, that the switching circuit is provided at the secondary side of the low frequency mains transformer, with the interposition of a rectifier, and that the lamp(s) is (are) provided at the output of the switching circuit.

5. An electronic transformer according to claim 4, characterized in that the switching circuit comprises a power filter switched by an electronic switch and that the control circuit comprises a drive circuit for driving said switch and a duty ratio adjusting circuit for on the one hand adjusting and on the other hand varying, on the basis of the output signal of the rectifier, the drive signal supplied by the drive circuit.

6. An electronic transformer according to claim 5, characterized in that a current limiter is provided, which measures the current supplied to the power filter by the electronic switch and, in case the current measured is too large, predominantly with respect to the duty ratio adjusting circuit drives the drive circuit in such a manner that said drive circuit at least reduces the current supplied by the electronic switch.

7. An electronic transformer according to claim 3, characterized in that two series circuits, each consisting of a capacitor and an electronic switch, are connected in parallel across the primary winding of the high frequency transformer, that means are provided for providing a DC voltage on the respective junctions between the associated capacitor and electronic switch and that means are provided for alternately closing the electronic switches with equal conducting times.

8. An electronic transformer according to claim 7, characterized in that said means for driving the electronic switches supply drive signals having a constant frequency and a variable pulse width.

9. An electronic transformer according to claim 8, characterized in that current limiting means are provided.

*figuur 1*

EP 0 460 736 A1

figuur 2

figuur 3a

figuur 3b

EP 0 460 736 A1

figuur 4a

figuur 4b

EP 0 460 736 A1

European
Patent Office

**EUROPEAN SEARCH
REPORT**

Application Number

**EP 91 20 1286**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,P | EP-A-0 396 791 (RENCOTUOTE)<br>* column 1, line 1 - column 2, line 38 * * column 3, line 43 - column 4, line 25; figures 1-3 *<br>− − − | 1,2,6,8 | H 05 B 39/04 |
| Y | DE-A-3 701 805 (SEDLBAUER)<br>* column 3, line 1 - column 4, line 51; figure 1 *<br>− − − | 1-9 | |
| Y | DE-A-1 613 663 (FERNSEH)<br>* page 3, line 5 - page 4, line 14; figure 1 *<br>− − − − − | 1-9 | |
| | | | TECHNICAL FIELDS SEARCHED (Int. Cl.5) |
| | | | H 05 B |

The present search report has been drawn up for all claims

| Place of search | Date of completion of search | Examiner |
|---|---|---|
| The Hague | 03 September 91 | SPEISER P. |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons
        
& : member of the same patent family, corresponding
document